(19)

Europäisches
Patentamt
European
Patent Office
Office européen
des brevets

(11) **EP 1 988 654 A1**

(12) **EUROPEAN PATENT APPLICATION**

(43) Date of publication:
**05.11.2008 Bulletin 2008/45**

(51) Int Cl.:
**H04L 1/00** $^{(2006.01)}$

(21) Application number: **07008875.2**

(22) Date of filing: **02.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **MATSUSHITA ELECTRIC INDUSTRIAL CO., LTD.**
**Osaka 571-8501 (JP)**

(72) Inventor: **Goltischek Edler von Elbwart, Alexander**
**63225 Langen (DE)**

(74) Representative: **Grünecker, Kinkeldey, Stockmair & Schwanhäusser**
**Anwaltssozietät**
**Leopoldstraße 4**
**80802 München (DE)**

(54) **Communication scheme for channel quality information**

(57)     The invention relates to different methods for reporting channel quality reports in a mobile communication system. Further, the invention relates to a reporting entity (e.g. mobile terminal) and a receiving entity (e.g. base station) which receives the channel quality reports. In order to propose a scheme for efficiently reporting channel quality of individual resource block groups in a mobile environment the invention provides a more efficient compression for the indication of the resource blocks/coefficients/partitions reported on in a channel quality report. This may be achieved by indicating the transitions between two resource block group sequences / coefficient index sequences / partition index sequences e.g. by applying a differential encoding. Furthermore, the maximum number of transitions that may be reported relative to another (differentially encoded or non-differentially encoded) sequence may be limited so as to further reduce the signalling overhead.

Fig. 8

**Description**

**FIELD OF THE INVENTION**

The invention relates to different methods for reporting channel quality reports in a mobile communication system. Further, the invention relates to a reporting entity (e.g. mobile terminal) and a receiving entity (e.g. base station) which receives the channel quality reports.

**TECHNICAL BACKGROUND**

**Long Term Evolution (LTE)**

Third-generation mobile systems (3G) based on WCDMA (Wideband Code Division Multiple Access) radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio-access technology that is highly competitive.

However, knowing that user and operator requirements and expectations will continue to evolve, the 3GPP (3rd Generation Partnership Project) has begun considering the next major step or evolution of the 3G standard to ensure the long-term competitiveness of 3G. The 3GPP launched a Study Item "Evolved UTRA and UTRAN" (abbreviated E-UTRA and E- UTRAN) also referred to as long-term evolution (LTE). The study will investigate means of achieving major leaps in performance in order to improve service provisioning and reduce user and operator costs.

It is generally assumed that there will be a convergence toward the use of Internet Protocols (IP), and all future services will be carried on top of IP. Therefore, the focus of the evolution is on enhancements to the packet-switched (PS) domain.

The main objectives of the evolution are to further improve service provisioning and reduce user and operator costs as already mentioned.

More specifically, some key performance and capability targets for the long-term evolution are

- Significantly higher data rates compared to HSDPA and HSUPA: envisioned target peak data rates of more than 100Mbps over the downlink and 50Mbps over the uplink
- Improved coverage: high data rates with wide-area coverage
- Significantly reduced latency in the user plane in the interest of improving the performance of higher layer protocols (for example, TCP) as well as reducing the delay associated with control plane procedures (for instance, session setup)
- Greater system capacity: threefold capacity compared to current standards.

One other key requirement of the long-term evolution is to allow for a smooth migration to these technologies.

**LTE architecture**

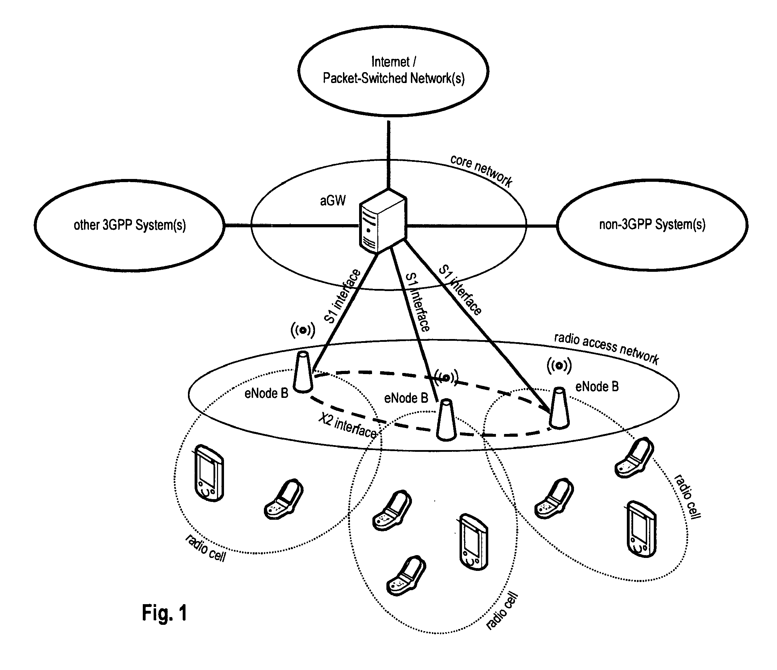

In Fig. 1 an overview of a 3GPP LTE mobile communication network is shown. The network consists of different network entities that are functionally grouped into the Core Network (CN), the Radio Access Network (RAN) and the User Equipments (UEs) or mobile terminals.

The radio access network is responsible for handling all radio-related functionality *inter alia* including scheduling of radio resources. The core network may be responsible for routing calls and data connections to external networks.

The LTE network is a "two node architecture" consisting of access gateways (aGW) and enhanced base stations, so-called eNode Bs (abbreviated eNB or eNode B). The access gateways will handle core network functions, i.e. routing calls and data connections to external networks, and also implement radio access network functions. Thus, the access gateway may be considered as to combine functions performed by GGSN (Gateway GPRS Support Node) and SGSN (Serving GPRS Support Node) in todays 3G networks and radio access network functions as for example header compression, ciphering/integrity protection. The eNodeBs may handle functions as for example Radio Resource Control (RRC), segmentation/concatenation, scheduling and allocation of resources, multiplexing and physical layer functions.

A mobile communication network is typically modular and it is therefore possible to have several network entities of the same type. The interconnections of network elements are defined by open interfaces. UEs can connect to an eNodeB via the air interface or Uu.

The eNodeBs have a connection to an access gateway via the S1 interface. Two eNodeBs are interconnected via the X2 interface.

Both 3GPP and Non-3GPP integration may be handled via the access gateway's interface to the external packet data networks (e.g. Internet).

**Channel Quality Information (CQI) transmission**

In a multi-user centrally managed system, a scheduler assigns transmission resources to several users as has been outlined above. Since generally the channel conditions for different users will vary over at least time and frequency, some sort of channel state or channel quality information is required at the scheduler, preferably transmitted from each user equipment device to the scheduler entity.

For most multi-user scheduler algorithms (except Round Robin), the most accurate channel state information should be signalled for the strongest resource blocks, to optimally assign a resource to a user where the channel exhibits a good quality. This will further be used in case that for transmission of data, the modulation or coding scheme is adapted to the channel quality, to increase the spectral efficiency, i.e. in cases where link adaptation is performed. It should be noted that the benefit for link adaptation also exists of there is a Round Robin scheduler employed in the system.

Generally the CQI is transmitted from a transmitting entity to a receiver entity. In the context of 3G radio network as in UMTS, where a NodeB implements a scheduling function and may act as the multi-user management entity, as well as a multi-cell management entity, the CQI for the downlink transmission chain is obtained (estimated) by a mobile terminal/user equipment (UE). The user equipment transmits CQI to a NodeB (base station). Therefore with respect to CQI transmission the user equipment acts as the transmitter entity, and the NodeB as the receiver entity.

Generally, the channel may be considered to consist of a number of $N_{rb}$ resource blocks. For example, the mobile terminal may measure CQI values for each of the resource blocks.

In case a full feedback is transmitted, i.e. the CQI information is not compressed prior to transmission, a CQI value for each of the $N_{rb}$ resource blocks is transmitted, giving the highest accuracy of information at a very high cost of required transmission bits.

To get a rough estimate of the overhead on the CQI feedback information, a system based on the following configurations may be considered: the communication system is equipped with 2x2 MIMO (Multiple Input Multiple Output) using PARC (Per Antenna Rate Control), 20 MHz transmission bandwidth (48 Resource Blocks), 0.5 ms CQI feedback interval, 1/3 rate turbo encoding, no-repetitions or puncturing, and with 24 bit CRC attached. The total CQI feedback overhead of this configuration would be 2.904 Mbps per user.

**CQI Compression**

One approach to reduce the overhead induced by CQI signalling has been suggested in 3GPP RAN WG#1 Tdoc. R1-061777, "DCT based CQI reporting scheme", available at http://www.3gpp.org and incorporated herein by reference. The document proposes a scheme using a Discrete Cosine Transform (DCT) to concentrate information into a small number of coefficients and discusses different mechanisms which coefficients to transmit. As outlined in the co-pending application no. EP 06 020 175.3 of the same applicant (the co-pending application being incorporated herein by reference) there exist a variety of different coding schemes for CQI information.

*Threshold Scheme*

Another CQI compression scheme, referred to as the threshold based CQI scheme, has been proposed in 3GPP RAN WG#1 Tdoc. R1-070397, "CQI design and its impact on DL performance", available at http://www.3gpp.org and incorporated herein by reference. Based on the measured CQIs by the mobile terminal, a threshold is applied relative to the highest measured CQI. All resource blocks whose CQI values lie within the threshold are reported. To compress the signalling overhead of the CQI values to report, an average CQI value is computed of the CQIs that are included in the threshold relative to the highest measured CQI. The quantized version of the average CQI is reported to the NodeB together with a bit mask indicating which resource blocks or sub-carriers are included in the averaging.

*Differential Value Feedback*

Another alternative approach for reducing the required feedback resources, the CQI values can be transmitted in a differential fashion. The general principle is to transmit one CQI value e.g. for one resource block as an absolute value, and take this value as a reference for CQI values for other resource blocks. Assuming that the difference between other CQI values and the reference CQI value is substantially smaller than the absolute CQI values, fewer bits may be sufficient to quantise that difference than would be required for an absolute value.

For example, if absolute values range between 0 and 31 dB, and the quantisation step size should be 1 dB, then 32 values = 5 bit are necessary for an absolute CQI value to cover the whole range. In case the difference between adjacent CQI values is between - 3 and +4 dB, with a step size of 1 dB only 8 values = 3 bit are necessary for such a differential CQI value.

For the LTE context, the differential value feedback concept is particularly attractive if there is a high correlation of CQI values in time or frequency domain. In 3GPP TSG RAN WG#1 TDoc. R1-070362, "Compressed CQI Reporting Scheme", available at http://www.3gpp.org and incorporated herein by reference, more details and studies of differential value feedback schemes for LTE are presented.

**Downlink transmission in LTE**

In LTE OFDM downlink, data may be transmitted in "localised" or "distributed" mode:

- Localised Mode: Adjacent subcarriers are assigned for transmission to a single UE ("Resource Block")

- Distributed Mode: Subcarriers carrying data for the same UE are distributed across the frequency band

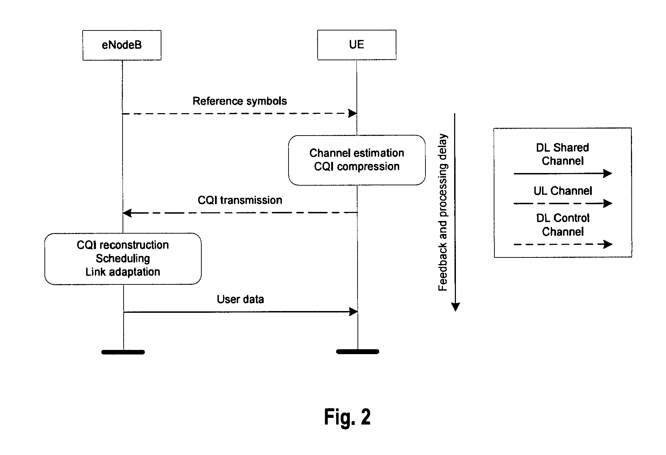

For LTE localised mode in downlink, accurate resource block-dependent channel quality information (CQI) has to be signalled from UE to eNodeB. As illustrated in Fig. 2 the mobile terminal UE may perform a channel estimation based on reference symbols received from the base station Node B. Subsequently, the mobile terminal reports the measurement results to the base station utilizing some compression scheme to signal the CQI information. The base station will reconstruct the CQI information and will perform scheduling and link adaptation based on the CQI information. Resource Blocks (RBs) are chosen/scheduled when they exhibit good SINR which correlates to a good CQI. The CQI also determines adaptive modulation and coding parameters, resulting in increased spectral efficiency. In case of channel fluctuation (e.g. due to mobility), the resource blocks with the best channel quality may change with time.

Still, although the above mentioned CQI compression schemes increase the efficiency of the schemes in terms of overhead still further improvements may be desirable for enabling efficient reporting and resource allocation.

**SUMMARY OF THE INVENTION**

One object of the invention to propose a scheme for efficiently reporting channel quality of individual resource block groups in a mobile environment.

The object is solved by the subject matter of the independent claims. Advantageous embodiments of the invention are subject matters of the dependent claims.

Some of the CQI reporting schemes require transmission not only of CQI values but also of corresponding CQI indices so as to identify the resource blocks reported. For example, the threshold scheme discussed above requires the transmission of a resource block bitmap as an index field, together with a single CQI value that denotes the average CQI value of the resource blocks signalled by the index field.

According to one aspect of the invention, a more efficient compression for the indication of the resource blocks reported on in a channel quality report is disclosed. This may be achieved by indicating the transitions between two resource block group sequences (which could be similar to the before mentioned bitmaps), e.g. by applying a differential encoding. Furthermore, the maximum number of transitions that may be reported relative to another (differentially encoded or non-differentially encoded) resource block group sequence may be limited so as to further reduce the signalling overhead. The individual resource blocks may be grouped into resource block groups (e.g. two resource blocks per group) and channel quality may be thus (measured and) reported per resource block group.

These principles may also be applied in coding schemes employing transformations (e.g. a discrete cosine transformation, wavelet transform, Fourier transform) to the channel quality values of the resource blocks or resource block groups. Hence, instead of indicating the transitions between resource block group sequences, the transitions between coefficient index sequences that indicate the index of the reported coefficients may be encoded.

Similarly, the principles also equally apply to the use of partitioning of the channel quality values as described in the before mentioned co-pending application EP 06 020 175.3 above. When using partitioning, the allocation of the different subcarriers, resource blocks, or resource block groups to a particular partition needs to be signalled. This allocation to a partition may be for example represented in a partition index sequence. Accordingly, in a channel quality report the partitioning may be indicated by identifying the transitions between two partition index sequences.

One embodiment of the invention relates to a method for reporting channel quality reports in a mobile communication system. In this method a resource block group sequence representing a set of resource block groups to be reported in the channel quality report is generated first. Further, a channel quality report is generated that is indicating transitions between the generated resource block group sequence and another resource block group sequence in its channel quality index field. The channel quality report is subsequently transmitted from a transmitting entity to a receiving entity.

The channel quality index field in the report may for example indicate the resource block groups reported in the channel quality report. Moreover, the channel quality report may further comprise a channel quality value field for indicating the channel quality values for the respective resource block groups reported.

In order to indicate the transitions, the generated resource block group sequence may be differentially encoded relative to the other resource block group sequence.

In one embodiment of the invention the differentially encoded generated resource block group sequence indicates the transitions between the generated resource block group sequence and the other resource block group sequence. Hence, in this example, the generated resource block group sequence is differentially encoded relative to resource block group sequence itself.

In another embodiment, the other resource block group sequence may be differentially encoded itself. Here, the differentially encoded generated resource block group sequence thus indicates the transitions between the generated resource block group sequence and the differentially encoded other resource block group sequence, i.e. relative to a differential sequence. Accordingly, the reporting (transmitting) entity may first need to reconstruct the other resource block group sequence based on the differential sequence so as to be able to code the transitions for the generated resource group block sequence. Hence, in variation of the embodiment, the other resource block group sequence may have been differentially encoded relative to a further differentially encoded or non-differentially encoded resource block group sequence.

Generally, according to another embodiment of the invention, a differentially encoded resource block group sequence may only indicate up to a maximum number of transitions relative to another resource block group sequence. As will be outlined in further detail below, the selection of the appropriate number of transitions that may be reported between two reporting instances may allow for significantly reducing the signalling overhead required for indicating the resource block groups or resource blocks.

According to another embodiment, a set of channel quality values of the resource block groups to be reported may be differentially encoded relative to another set of channel quality values. These differentially encoded channel quality values may be comprised in the channel quality value field of the generated channel quality report.

In a further embodiment, the channel quality report indicates only up to a maximum number of transitions being smaller than the total number of possible transitions between the generated resource block group sequence and the other resource block group sequence. This maximum number of transitions may be for example set lower than or equal to one half of the number of different possible resource block group sets that can be represented by the resource block group sequence. Alternatively, the maximum number of transitions may be set smaller than or equal to one half of the number of resource block groups on which a channel quality measurement is performed.

In some embodiments, the resource block group sequence is a sequence of two or more bits. The different bit combinations of the resource block group sequence indicate the different possible combinations of subsets of resource block groups. Hence, the resource block group sequence may be considered to represent a selected number of radio resource block groups out of the total number of resource block groups for which a respective channel quality value is determined. One example of such a sequence may be the before mentioned resource block bitmap, which when reporting on resource block groups should be rather referred to as a resource block group bitmap as an index field.

Typically, as the number of possible combinations that can be represented is given by the number of bits of the sequence, the number of possible bit combinations representable by the resource block group sequence is larger than the number of different possible combinations of (selected) subsets of resource block groups. Accordingly, at least one "excess" bit combination of the resource block group sequence may be used for (*inter alia* or exclusively) indicating to the receiving entity to receive the channel quality report that the defined maximum number of transitions that can be indicated by a single channel quality report has been exceeded.,

As indicated above, the idea of indicating only transitions within sequences between two reporting instances may also be applied when utilizing channel quality value encoding schemes based on transformations (e.g. into the frequency domain as for a DCT). Accordingly, another embodiment of the invention relates to channel quality reports in a mobile communication system where a set of channel quality values is transformed first to obtain a set of channel quality coefficients. Subsequently, a subset of the channel quality coefficients to report is selected and a coefficient index sequence indicating the indices of the selected subset of channel quality coefficients is generated. When generating a channel quality report the channel quality report may indicate the transitions between the generated coefficient index sequence and another coefficient index sequence in its channel quality index field in a similar fashion as outlined above.

The channel quality index field may thus indicate the selected subset of the channel quality coefficients reported in the channel quality report, and the channel quality report could further comprise a channel quality coefficient value field for indicating the coefficient values of the selected channel quality coefficients.

In a further embodiment the transitions may be indicated by differentially encoding the generated coefficient index sequence relative to the other coefficient index sequence.

In one example, the differentially encoded generated coefficient index sequence indicates the transitions between the generated coefficient index sequence and the other coefficient index sequence.

In another example the other coefficient index sequence is a differentially encoded and the differentially encoded generated coefficient index sequence could indicate the transitions between the generated coefficient index sequence and the differentially encoded other resource coefficient index sequence. Moreover, as a further option the other coefficient index sequence has been differentially encoded relative to a further differentially encoded or non-differentially encoded coefficient index sequence.

Essentially these examples are similar to same for the differential encoding of resource block group sequences as described above. Also similar to the prior examples related to the resource block group sequences, a differentially encoded coefficient index sequence may only indicate up to a maximum number of transitions relative to another coefficient index sequence, such that it could become possible to significantly reduce the signalling overhead required for indicating the coefficients reported by the channel quality report.

In another embodiment of the invention, the channel quality report indicates only up to a maximum number of transitions being smaller than the total number of possible transitions between the generated coefficient index sequence and the other coefficient index sequence. In one exemplary implementation, the maximum number of transitions is set lower than or equal to one half of the number of different possible coefficient sets that can be represented by the coefficient index sequence.

According to a further embodiment, the coefficient index sequence is a sequence of two or more bits, the different bit combinations of which indicate the different possible combinations of subsets of coefficients of the channel quality coefficients. The number of possible bit combinations representable by the coefficient index sequence may be larger than the number of different possible combinations of subsets of coefficients. Accordingly, at least one bit combination of the of the resource block group sequence could be (*inter alia* or exclusively) used for indicating that a maximum number of transitions that can be indicated by the channel quality report has been exceeded.

Other embodiments of the invention relate to the use of the idea of indicating transitions between two reporting instances in coding schemes for the channel quality measurements which allocate the measured values to different partitions and encode and transmit the values of at least one partition. Accordingly there are different possibilities how the concept of partitioning and the idea of indicating transitions between two reporting instances may be combined.

One possibility is to partition the channel quality values or the corresponding resource block groups into at least two partitions, and process at least one partition according to the method for reporting channel quality reports as described herein.

Another possibility, according to another embodiment of the invention is to partition channel quality values or the corresponding resource block groups into at least two partitions, and to generate a partition index sequence representing a set of resource block groups in one of the partitions. A generated channel quality report may then indicate transitions of the generated partition index sequence relative to another partition index sequence.

The processing of the partitions may be further performed according to one of the different methods described herein.

Other embodiments relate to apparatuses that are adapted to transmit reporting channel quality reports according to one of the different embodiments described herein (including or not including transformation and/including or not including partitioning). Accordingly the apparatus may be equipped with an appropriate processing unit to perform the processing of the channel quality measurements and a transmitter for transmitting the generated channel quality report. Accordingly, the apparatus may be further equipped with additional means as needed for generating the channel quality report.

Similarly, other embodiments relate to a computer readable medium storing instructions that, when executed by a processing unit of an apparatus, cause the apparatus to report channel quality reports in a mobile communication system, by performing all necessary steps to process channel quality measurements and for generating and transmitting a channel quality report.

**BRIEF DESCRIPTION OF THE FIGURES**

In the following the invention is described in more detail in reference to the attached figures and drawings. Similar or corresponding details in the figures are marked with the same reference numerals.

Fig. 1          shows an exemplary architecture of an LTE/SAE communication system,

Fig. 2          shows an exemplary signalling flow between a base station (Node B) and a mobile terminal (UE) for communication CQI information from mobile terminal to base station which is also utilized in some embodiments of the invention,

Fig. 3          shows an exemplary allocation of the resources in time and frequency domain to resource blocks for an OFDM system in which the invention can be applied,

Fig. 4         illustrates the threshold scheme for encoding channel quality information which may also be used in some embodiments of the invention,

Fig. 5         exemplarily illustrates the structure of a channel quality report according to an exemplary embodiment of the invention,

Fig. 6 & 7     show exemplary channel quality measurement results of at a reporting entity (e.g. mobile terminal) at two different reporting instances, and the application of the principles and ideas of the invention to a threshold CQI reporting scheme,

Fig. 8         exemplarily illustrates the sequence of full channel quality reports according to prior-art schemes in comparison to an exemplary channel quality reporting scheme according to an embodiment of the invention, where differential channel quality reports are utilized,

Fig. 9 & 10    exemplarily visualize the definition of four sets of resource block groups and their use for allowing a more efficient encoding of the resource block group index field in a channel quality report according to one exemplary embodiment of the invention,

Fig. 11 & 12   exemplarily visualize the definition of two mutually exclusive sets of channel quality coefficients and their use for allowing a more efficient encoding of the coefficient index field in a channel quality report reporting on a fixed number M of coefficients according to one exemplary embodiment of the invention,

Fig. 13 & 14   exemplarily visualizes the use of the principles of the invention to encode two channel quality measurement results of at a reporting entity (e.g. mobile terminal) at two different reporting instances according to a Best M Average reporting according to one exemplary embodiment of the invention,

Fig. 15 & 16   exemplarily visualizes the use of the principles of the invention to encode two channel quality measurement results of at a reporting entity (e.g. mobile terminal) at two different reporting instances according to a Best M Individual reporting according to one exemplary embodiment of the invention, and

Fig. 17 & 18   exemplarily visualize the distribution of channel quality measurement values for resource block groups at two distinct reporting instances to two partitions and the partitions' use for allowing a more efficient encoding of the partition index field in a channel quality report according to one exemplary embodiment of the invention.

## DETAILED DESCRIPTION OF THE INVENTION

The following paragraphs will describe various embodiments of the invention. For exemplary purposes only, most of the embodiments are outlined in relation to SAE/LTE systems discussed in the Technical Background section above. It should be noted that the invention may be advantageously used for example in connection with a mobile communication system such as the SAE/LTE communication system previously described, but the invention is not limited to its use in this particular exemplary communication network.

The explanations given in the Technical Background section above are intended to better understand the mostly SAE/LTE specific exemplary embodiments described herein and should not be understood as limiting the invention to the described specific implementations of processes and functions in the mobile communication network. Similar the use of SAE/LTE specific terminology is intended to facilitate the description of the key ideas and aspects of the invention but should not be understood as to limit the invention to SAE/LTE systems.

According to one aspect of the invention, a more efficient compression for the indication of the resource blocks reported on in a channel quality report. This may be achieved by indicating the transitions between different resource block group sequences, e.g. by applying a differential encoding. Furthermore, the maximum number of transitions that may be reported relative to another resource block group sequence may be limited so as to further reduce the signalling overhead.

Moreover, the individual resource blocks may be grouped into resource block groups (e.g. two resource blocks per group) and channel quality may be thus (measured and) reported per resource block group. Accordingly, a resource block group may be considered a group of at least two resource blocks. Further, the term resource block as used herein refers to one of a plurality of resource units of a channel for which a channel quality measure is obtained.

Channel quality reporting may thus be performed on a per-resource block basis, however, in most embodiments it may be assumed that it is reported on a resource block group basis. If reporting on a resource block group basis (i.e.

signalling one measurement value for a resource block group) it may be necessary to combine measurements values for the individual resource blocks of a group. For this combination various methods may be utilized, e.g. arithmetic averaging, geometric averaging, weighted averaging. In some embodiments one of the combination methods described in the contribution to the IEEE 802.16 Broadband Wireless Access Working Group by Ran Yaniv, et al, "CINR measurements using the EESM method" (March 2005) available http://ieee802.org/16 at and incorporated herein by reference may be used.

A resource block may further denote the smallest amount of resources of a channel that can be allocated to a user (e.g. by scheduling). For example in an OFDMA system, a resource unit could refer to a resource of one subframe in the time domain and a subband in the frequency domain, while a resource block denotes a subframe in the time domain and a subcarrier (of one of the subbands) in the frequency domain. In another embodiment of the invention, a resource block refers to a range of time or frequencies (subcarriers) - in time or frequency domain - over which the channel state is substantially flat, e.g. a coherence time or coherence bandwidth, which may or may not be a multiple of the respective smallest amount of resources in the communication system (e.g. resource block, subframe, TTI).

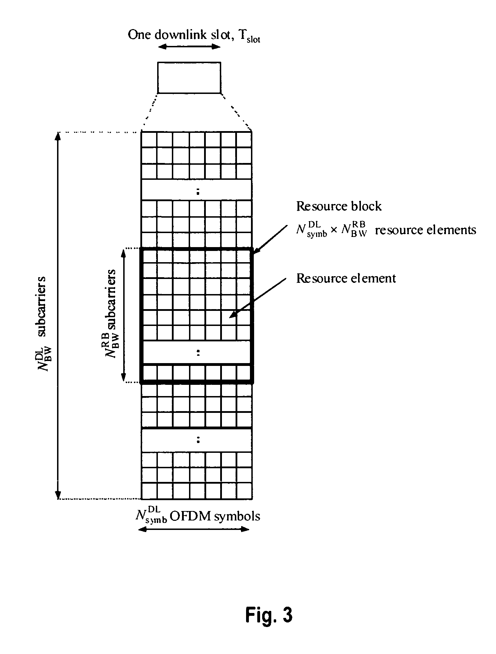

In another embodiment of the invention a definition of the resource blocks as shown in Fig. 3 is assumed. Fig. 3 shows the exemplary allocation of the resources in time and frequency domain to resource blocks. The channel may be considered to consist of one downlink slot (two downlink slots may be considered forming one subframe) in the time domain that is spanning $N_{symb}^{DL}$ OFDM symbols or resource elements) in the time domain and one subcarrier of the $N_{BW}^{DL}$ subcarriers in the frequency domain. Further, the OFDM symbols over $N_{BW}^{RB}$ subcarriers may be considered to form a resource block, i.e. $N_{BW}^{RB} \times N_{symb}^{DL}$ resource elements for a single resource block. A resource block group may for example consist of two neighbouring resource blocks in frequency domain over a period of one subframe.

When indicating only transitions between successive or parallel measurement results by signalling only deltas between two measurement (and reporting) instances in a lossy fashion, it may be important that the reporting entity and receiving entity are "synchronized". As a result, it may be desirable that when using a lossy differential encoding of transitions (e.g. by not reporting the channel quality measurement results for all resource block groups or only for a subset of channel quality coefficients, by indicating more than a maximum number of transitions in a report even if there should be more transitions, etc.) of two report instances, the reporting entity should be aware of the receiving entities channel quality model reconstructed from its lossy channel quality reports so as to predict and appropriately determine the transitions to signal so as to allow for the most accurate reconstruction of the channel state at the receiving entity. Hence, if information is differentially encoded (i.e. only the differences between the currently processed channel quality measurement result and another previously processed channel quality measurement result are signalled) the encoding may depend on whether differences should be determined at the reporting entity relative to the channel state used at the receiving entity as a basis for the reconstruction of the updated channel state in view of the signalled differential updates.

It should be noted that it has been referred to indicating transitions between two measurement/reporting instances. This formulation should take into account that in this invention the basis on which differential data / transitions are determined for a currently processed measurement might be comprised within the same channel quality report or may have been reported earlier in time, e.g. in another channel quality report. For instance if utilizing multiple antennas in a MIMO scheme, a channel state measurement may be performed for each transmit antenna for all resource blocks or resource block groups. Though the measurements results for all antennas may be transmitted in a single measurement report, parts of the respective measurements for the respective antenna may be encoded relative to the measurement for another antenna. Similarly, a channel state measurement may be performed for all resource blocks or resource block groups that pertain to a single codeword, where the respective measurements pertaining to a respective codeword may be encoded relative to the measurements pertaining to another codeword. The same approach can be applied mutatis mutandis to polarisation angles, carrier frequencies, or spreading codes.

Furthermore, as indicated above, the principles of signalling transitions of resource block group sequences may also be applied in coding schemes employing transformations (e.g. a discrete cosine transformation) to the channel quality values of the resource blocks or resource block groups. Hence, instead of a indicating the transitions between resource block group sequences, the transitions between coefficient index sequences that indicate the index of the reported coefficients may be coded. A coefficient index sequence is indicating the indices of selected channel quality coefficients (i.e. a subset of the total number of coefficients maintained by transformation) of the coefficient values of which are to be signalled in a channel quality report.

Similarly, the principles also equally apply to the use of partitioning of the channel quality values as described in the before mentioned co-pending application EP 06 020 175.3 above. When using partitioning, the allocation of the different channel quality values or coefficients to a particular partition needs to be signalled. The allocation of the values or coefficients to a partition may be for example represented in a partition index sequence. Accordingly, in a channel quality report the partitioning may be indicated by identifying the transitions between two partition index sequences. A partition index sequence may thereby indicate the resource block groups reported or, if transformations are employed in the coding of a channel quality measurement, the indices of the selected coefficients reported in the channel quality report.

Further another aspect of the invention relates to the definition of a channel quality report format. One embodiment of the invention proposes a channel quality report for use in reporting channel quality measurements of resource block groups in a mobile communication system. The channel quality report comprises a channel quality index field for indicating the transitions between two resource block group sequences to thereby identify a subset of resource block groups reported in the channel quality report.

Further, the channel quality report may further comprise a channel quality value field for indicating the channel quality values for the respective resource block groups reported in the channel quality report. The channel quality index field may be defined so that it may convey differentially encoded information indicating the transitions between two resource block group sequences. Similarly, also the channel quality value field may be defined such that it may a differentially encoded set of channel quality values indicating the channel quality values for the respective resource block groups reported in the channel quality report relative to another set of channel quality values.

The concepts presented herein may be also combined with differential value feedback concepts to increase the amount of saving / the reduction of required feedback data rate.

In the following, for exemplary purposes only, several different embodiment of the will be explained is explained with respect to the Threshold Scheme described in the Technical Background section. Nevertheless, as will be outlined below, the ideas presented herein are also applicable to other CQI compression schemes.

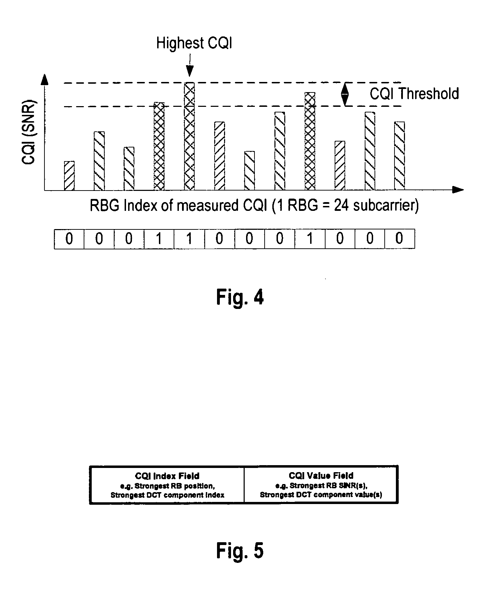

The threshold scheme principle can be exemplified by looking at Fig. 4. In the figure it is assumed that that a channel quality value (e.g. a CQI value) is obtained on a resource block group (RBG) basis, i.e. for each defined resource block group. A resource block group can generally consist of an arbitrary number of subcarriers. In this example a resource block group contains 24 subcarriers, i.e. 2 resource blocks in the frequency dimension. Consequently the x-axis in the Fig. 4 can be interpreted as a frequency axis.

In this example, the y-axis represents the channel quality value, for example an SINR (Signal to Interference Noise Ratio) value. Depending on the communication system the x-axis could also represent time, code, spatial distance, antenna number, polarisation angle, etc. Likewise the y-axis could also represent signal power, signal amplitude, modulation index, coding rate, etc. Therefore, even though most of the explanation focuses on frequency and SINR, these characteristics can be exchanged mutatis mutandis in the description below.

In the threshold scheme, resource block groups are reported that are within a channel quality threshold of the highest channel quality value. Typically the threshold is a value given in dB (decibel). Therefore an index field, e.g. a bitmap, is required to signify for each resource block group whether it lies within the channel quality threshold ("1") or not ("0"). According to the example, resource block group #5 has the highest channel quality value, and resource block groups #4, #5, #9 are within the threshold. Consequently the index field carries "1"s at positions #4, #5, and #9, and "0"s for the other indices. A characteristic of the threshold scheme is that the average channel quality value (i.e. SINR) of resource block groups within the channel quality threshold is reported.

Therefore, for the example illustrated in Fig. 4 and with respect to Fig. 5, the channel quality report would consist of a channel quality index field of size 12 bits, and a channel quality value field containing said average channel quality value, using e.g. 5 bits as shown in the following table:

**Table 1**

| Compression Scheme | CQI Index Field | CQI Value Field |
|---|---|---|
| Best 5 Average | 16 bits =62% | 10 bits =38% |
| Best 7 Individual | 19 bits =32% | 40 bits =68% |
| DCT Greatest 8 | 19 bits =32% | 40 bits =68% |
| Threshold | 25 bits =83% | 5 bits =17% |
| DCT Partitioning 8-6-1 | 26 bits =43% | 35 bits =57% |

Depending on the channel quality reporting scheme, the index field may constitute a substantial overhead or a substantial part of the full feedback report. In Table 1 some example numbers are given, assuming for exemplary purposes that a single channel quality value is represented by a 5 bits quantity and a number of 25 resource block groups from which to report.

Since a bitmap index field constitutes a large part of the overhead (up to 83% for the threshold scheme), there is a big potential for saving by compressing the same. The non-bitmap index fields may also offer good possibilities for saving of overhead (e.g. for Best M schemes, DCT based schemes), as will be outlined in more detail below.

In order to reduce the bits for the index field (also denoted channel quality index field herein) according to one embodiment of the invention a differential index is introduced referencing to a previously transmitted full index field. The term full index field thereby denotes a channel quality report with a channel quality index field comprising a non-differential indication of the reported resource block groups. The differential index field may be for example used to indicate the changes of the channel quality values for the strongest resource block groups, as typically the channel quality report may only report on a subset of the resource block groups for which channel quality values are determined to save signalling overhead. Furthermore, it my be desirable to generally signal the strongest components as same are most important for channel allocation and scheduling.

Assuming that every N subframes, a full index field is transmitted, between these full index field reports, a differential index field may be used in the intermediate "differential" reports to indicate changes of the resource block group indices.

In most applications, resource block group-dependent channel quality information is required only for mobile terminals in very low mobility, resulting in slowly varying channel conditions (otherwise a simple average channel quality value without an index field may be sufficient information). Due to the nature of the slowly varying conditions, no or few changes of the strongest resource block groups are most likely. Therefore the structure of the differential index field report is such that the maximum number of reported changes in the index field can be limited to a small value.

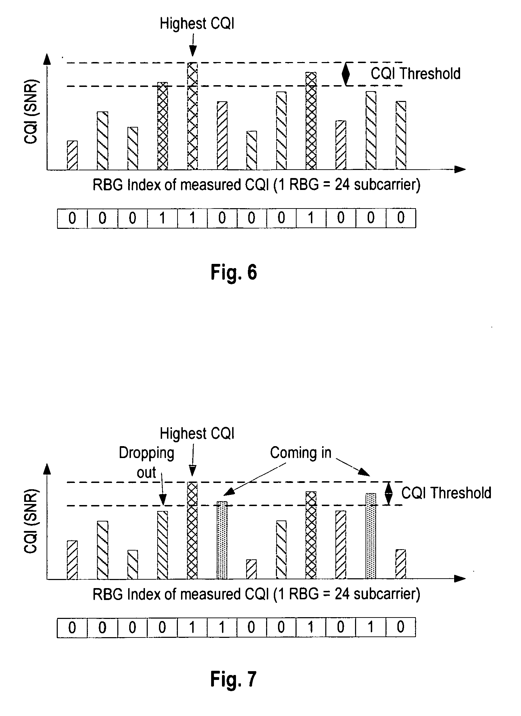

As shown in Fig. 6 one may assume for exemplary purposes that a full report gives initial (absolute) positions of resource block groups within threshold. In this example, the channel quality index field of the channel quality report may consist of resource block group sequence in form of a bitmap as illustrated in the lower part of Fig. 6. At the next reporting instance being illustrated in Fig. 7 and assuming that channel conditions have changed not too drastically, a differential index report gives positions where changes occur with respect to which resource block groups are now or not anymore within the threshold. Instead of reporting indices of blocks within threshold, indices of changes are reported. A "change" is either the transition from within to out of the threshold ("dropping out"), or vice versa coming into the threshold ("coming in"). As can be seen in the example of Fig. 7, three changes have occurred: One resource block group is dropping out, and two are coming in. If a full report were to be transmitted, the index field may for example require a 12 bit quantity for signalling whether the respective individual resource block groups are within the threshold or not. An exemplary resource block group sequence in form of a bitmap is illustrated in the lower part of Fig. 7.

For a differential index report only reporting the transitions of the resource block groups into or out of the threshold area, it needs to be determined where the channel quality values of the index field have changed relative to another (e.g. a previous) reporting instance. Looking at the index fields of Fig. 6 and Fig. 7, a bitmap indicating a change (where "1" represents change and "0" represents no change) could look like 000101000010 since resource block groups #4, #6, and #11 change their status with respect to being within the threshold. Those skilled in the art will realize that this bitmap may be obtained by performing a bit-wise "Exclusive Or" operation between the two bitmaps given in the lower parts of Fig. 6 and Fig. 7.

Obviously the indication of transitions or changes in a bitmap alone may not accomplish a reduction in the signalling overhead, as still 12 bits would be required. However, since one may assume that the number of changes is rather small in the mobile communication scenario a maximum number of changes or transitions that can be at maximum indicated within the channel quality index field of the report may allow for further compression.

In the example where transitions of 12 resource block groups need to be traced" no bits to signal changes would be required if no changes may be indicated.

If an indication of up to 1 transition (i.e. 0 or 1 change) is allowed, then a total of 13 possible "changes" may occur, one possibility that there is no change at all, and one possibility to change for each of the 12 resource block groups. To signal which of these 13 possibilities occurs, 4 bits (actually allowing signalling 16 possibilities) would be sufficient for the differential index field to encode the transitions up to a maximum number of one transitions between two reporting instances.

Allowing the indication of at most 2 transitions (i.e. 0 changes, 1 change, or 2 changes) in the channel quality index field of a channel quality report, there exist 13 possibilities from the above case plus additionally 66 cases for changes of two arbitrary resource block groups out of the 12 resource block groups. In total 79 possible differences between two reporting instances exist, which would require 7 bits (actually allowing up to 128 possibilities) for the differential index field.

In summary, it can be noted that for the example above example where the resource blocks are grouped into 12 resource block groups of which only a part is to be reported, a full report indicating the reported resource block groups out of the 12 resource block groups in an absolute fashion (i.e. not differentially encoded) would require 12 bits and index bitmap that could be included in the reported resource block index field. If using a differential encoding and thereby only indicating up to a maximum amount of transitions the number of bits per differential report depends on maximum allowed number of changes as indicated in Table 1 below:

**Table 2**

| Max. Number of Changes / Transitions | Bits required for Full Report (bitmap) | Required Bits for Differential Report |
|:---:|:---:|:---:|
| 1 | 12 | 4 |
| 2 | 12 | 7 |
| 3 | 12 | 9 |
| 4 | 12 | 10 |
| 5 | 12 | 11 |
| 6-12 | 12 | 12+ |

As one can derive from the table above, the differential encoding of the resource block group index field may only provide overhead saving up to a limited number of transitions that can be reported on at a single reporting instance. If more than 5 changes in the reported resource block groups between two reporting instances should be indicated by means of differential encoding more bits might be required than when utilizing a full report.

Assuming that n denotes the number of resource block groups to report in a channel quality report and *k* denotes the maximum number of changes that can be reported then the following inequality must be fulfilled to enable a more efficient reporting requiring m bits, in comparison to a full report requiring n bits:

$$m = \left\lceil ld\left[ \sum_{i=0}^{k} \binom{n}{i} \right] \right\rceil < n \qquad \text{(Equation 1)}$$

The table below exemplarily shows the probabilities for a number of changes/transitions to occur between two reporting instances depending on the mobile terminals velocity and the number of subframes between two subsequent channel quality reports within a communication system scenario employing OFDM where the physical channel resource is divided into 25 resource block groups or resource blocks.

**Table 3**

| UE Velocity | Changes after 1 subframe | Changes after 2 subframes | Changes after 3 subframes |
|:---:|:---:|:---:|:---:|
| 3 km/h | No change: 75.2%<br>Up to 1 change: 96.3%<br>Up to 2 changes: 99.6%<br>Up to 3 changes: 3 99.6% | No change: 56.2%<br>Up to 1 change: 88.0%<br>Up to 2 changes: 97.2%<br>Up to changes: 99.4% | No change: 43.6%<br>Up to 1 change: 78.0%<br>Up to 2 changes: 94.1 %<br>Up to 3 changes: 98.4% |
| 15 km/h | No change: 26%<br>Up to 1 change: 58.7%<br>Up to 2 changes: 80.8%<br>Up to 3 changes: 92.3% | No change: 7.9%<br>Up to 1 change: 25.6%<br>Up to 2 changes: 47.3%<br>Up to 3 changes: 68.1% | No change: 3.0%<br>Up to 1 change: 11.9%<br>Up to 2 changes: 25.4%<br>Up to 3 changes: 42.4% |
| 30 km/h | No change: 9.7%<br>Up to 1 change: 27.2%<br>Up to 2 changes: 48.3%<br>Up to 3 changes: 67.9% | No change: 1.7%<br>Up to 1 change: 6.0%<br>Up to 2 changes: 15.0%<br>Up to 3 changes: 27.6% | No change: 0.4%<br>Up to 1 change: 2.0%<br>Up to 2 changes: 4.8%<br>Up to 3 changes: 9.9% |

As can be recognized from Table 3 limiting the number of changes that can be reported in a differential index report to a value of three will require a size of the differential index field of 12 bits, about 50% of the size of the full index field (25 bits).

In order to further optimize the channel quality reporting scheme (and the implied signalling overhead) the following parameters can be further controlled:

- Frequency / number of differential reports, depending on

  ■ UE characteristics

  • such as velocity
    A mobile terminal that is moving fast is likely to face more changes in the channel quality than a slow-moving mobile terminal. As a result it is likely that more transitions in the resource block (group) sequences occur between two reporting instances. Therefore it may be advantageous to increase the frequency of differential index reports, so that the number of changes between differential index reports can be kept small.
  • such as interference
    A mobile terminal that is located close to interfering transmitters (e.g. other eNodeBs, or other UEs) is likely to face a high interference level. Since this interference may have the same fluctuating properties as the desired signal, the dynamics of the resulting SINR will be increased, so as a result it is likely that more transitions in the resource block (group) sequences occur between two reporting instances. Consequently a mobile terminal facing strong interference may send many differential index reports within a given time so as to keep the number of reported changes between reports small (i.e. within the defined limit).

  ■ Cell characteristics

  • such as cell load / number of active users
    When there is load in the cell is small, i.e. only few mobile terminals report channel quality, the available resources for the feedback need to be shared among only those few mobile terminals. Therefore the accuracy of the channel quality reports may be increased by transmitting differential index reports frequently.

  ■ Traffic characteristics

  • such as buffer status

    When the transmit buffer for a user is filled, this means that data exists at the eNodeB that needs to be transmitted to the corresponding mobile terminal. Evidently if the transmit buffer is empty or almost empty, then an accurate knowledge on the channel quality at the eNodeB may be of reduced importance. Therefore the update interval between differential index reports from mobile terminal for which the buffer is almost depleted can be increased.

- Number of allowed changes in differential index report, depending on

  ■ time interval between differential index reports
    If the interval between differential index reports or the interval between full and differential index reports is small (e.g. 1 or 2 TTI) it is likely that less transitions in the resource block (group) sequences occur between two reporting instances (in comparison to scenarios where the interval between differential index reports or the interval between full and differential index reports is larger). Therefore the maximum number of allowed changes between index reports, which controls the amount of index compression that can be achieved, can be small, if the interval between index reports is small.
  ■ channel characteristics

  • such as channel coherence
    When there is a strong coherence or correlation between channel measurements, then the likelihood for changes between the measurements is reduced. For example, if there is a periodicity in the channel impulse response, e.g. in time domain, frequency domain, or in spatial (antenna) domain, then the general properties in terms of resource block groups that are reported can be expected to be very similar, therefore a small number of allowed changes should be sufficient to capture the transitions. Reasons for strong coherence or correlation could be a slow mobile terminal velocity, a channel impulse response consisting of very few peaks, or very similar channel impulse responses.

  ■ interference scenario
    If the interference is rather white, i.e. of roughly the same level, then the dynamics of the resulting SINR depends mainly on the dynamics of the signal, and not of the interference. Therefore changes are less likely to occur compared to a frequency-dependent interference scenario so that the maximum number of transitions in a report may be limited to a small number.

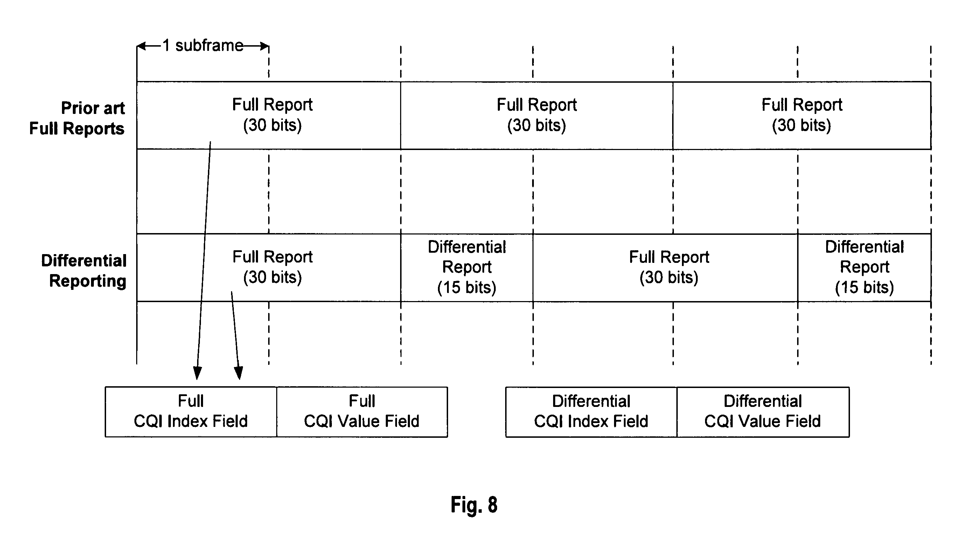

Fig. 8 shows an exemplary comparison of a prior art reporting scheme sending only full reports and a reporting scheme according to one embodiment of the invention, where one or more differential reports between successive full reports may be foreseen. Differential reports may not only include a differentially encoded resource block group index field, but also the channel quality values of the respective reported resource block groups may be differentially encoded with respect to the previous reporting instance. In the upper part of Fig. 8, illustrating a prior art reporting scheme according to the threshold principle, it may be exemplarily assumed that a full report consists of a CQI index field (i.e. full resource block group index field) containing a bitmap of 25 bits to indicate which of the 25 resource block groups are reported. Further, the prior art channel quality report may comprise a full CQI value field (i.e. channel quality value field) which is 5 bits in size and that is indicating the channel quality values of the reported resource block groups. In total full channel quality report in the prior art requires 30 bits. Assuming further that within one subframe 15 bits can be transmitted, a full report in the prior art occupies two subframes.

As shown in the lower part of Fig. 8, illustrating the reporting scheme according to one exemplary embodiment of the invention, a full report still requires 30 bits. However by limiting the number of changes than can be reported in a differential channel quality report, the differential CQI index field (i.e. the resource block group index field comprising differentially encoded information to indicate up to a limited number transitions only) requires only 12 bits. Assuming that also information for the CQI value field is differential encoded, instead of 5 bits as for the prior art, only 3 bits may be required for the differential CQI value field. So the total differential report requires 15 bits, occupying only a single subframe.

Therefore by employing a differential encoding scheme for the resource block group index field (and potentially further of the channel quality value field) more channel quality reports may be transmitted within the same time and/or less signalling information may be required for the same amount of channel quality reports in comparison to prior art schemes.

According to another embodiment of the invention, the individual resource block groups of a measurement may be assigned to different sets as described in the following in more detail. When reporting the measurement, the resource block groups in the report may be indicated by identifying the transitions of resource block groups among the defined sets at considering different reporting instances. Accordingly, the solution of this embodiment of the invention takes advantage of the probability of the resource block groups transiting among the four sets. The sets defined may be denoted "included set", "dropping out set", "coming in set" and "not included set".

*Included set*

The included set may be containing resource block groups that are reported on in the channel quality report and that are unlikely to be no longer reported at the next reporting instance. For example, considering the threshold scheme discussed previously herein, the resource block groups within the threshold and having measurement values close to the maximum may be considered unlikely to drop out from reporting and thus are forming the included set. For example, the development of the respective channel quality values of a respective resource block group over plural reporting instances (and the fact whether the respective resource block group has been included in the reports at the different reporting instances) may be evaluated so as to assign the resource block groups to this set.

*Dropping out set*

The dropping out set may contain resource block groups that are reported but likely to drop out of reporting at one of the next reporting instances. For example resource block groups that are still within, but close to, the threshold of the threshold scheme discussed above may be part of this set. As indicated above, the development of the respective channel quality values of a respective resource block group over plural reporting instances (and the fact whether the respective resource block group has been included in the reports at the different reporting instances) may be evaluated so as to assign the resource block groups to this set. It may be further advantageous is the size of the set is limited, e.g. the set may only comprise up to a given maximum number of resource block groups, e.g. for which a transition out of the threshold area is likely.

*Coming in set*

Coming in set may be considered the functionally inverse set of the dropping out set. The set may contain resource block groups that are currently not reported, e.g. due to being outside, but close to, the threshold, but likely to come in, i.e. to be reported in one of the next reporting instances (e.g. due to entering the threshold). Similar to the cases above, development of the respective channel quality values of a respective resource block group over plural reporting instances (and the fact whether the respective resource block group has not been included in the reports at the different reporting instances) may be evaluated so as to assign the resource block groups to this set. It may be advantageous to limit the size of the coming in set, so that e.g. it may contain only a maximum number of resource block groups.

*Not included set*

This set may be considered comprising the remaining resource block groups that are not assigned to one of the before mentioned sets. In other words, the non included set may contain all resource block groups that are not reported (e.g. due to lying outside the threshold) and are unlikely to be reported in one of the next reporting instances (e.g. due to being far beyond the threshold).

The likelihood of resource block groups to "come in" or "drop out" (and its assignment to the respective sets) may be determined based one or more of the following characteristics:

- A resource block group that is just "coming in" is unlikely to "drop out" soon, so it does not need to be included in the dropping out set immediately but rather to the included set (hysteresis-like behaviour).

- A resource block group that is just "dropping out" is unlikely to "come in" soon, so it does not need to be included in the coming in set immediately but rather to the not included set (hysteresis-like behaviour).

- A resource block group that is in the "not included set" may be moved to the "coming in" set, if its channel quality value is consistently increasing or coming close to a threshold value.

- A resource block group that is in the "included set" may be moved to the "dropping out set" if its channel quality value is consistently decreasing or coming close to a threshold value.

With this definition of the sets, a differential index report may only point to transitions from the dropping out set to the not included set and from the coming in set to the included set, in order to reduce the involved amount of required signalling of transitions.

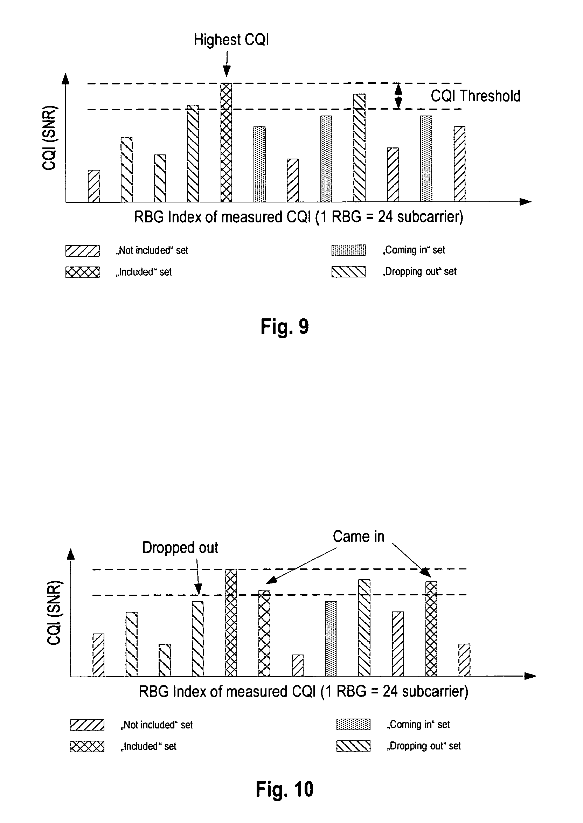

Fig. 9 and Fig. 10 exemplarily visualize the definition of four sets of resource block groups and their use for allowing a more efficient encoding of the resource block group index field in a channel quality report. Fig. 9 and Fig. 10 exemplarily show the CQI values (in terms of their SNR) measured for 12 resource block groups (which may for example each comprise 24 resource blocks) at different reporting instances and the assignment of the respective 12 resource block groups to one of the four previously defined sets taking into account a threshold.

It may be assumed that at the first reporting instance (which in this example denotes to a point in time) a full report indicating the resource block groups of the channel quality report at the first reporting instance is provided (similar as in the example described with respect to Fig. 8 previously herein). When utilizing the approach of building sets and reporting transitions between some of the sets the full channel quality reports indicate in the resource block group index field, which resource block groups belong to which of the four groups. Hence at the first reporting instance where a full channel quality report is sent the resource block group index field may indicate the assignment of the 12 resource block groups in Fig. 9 to the four sets as follows (the resource block group groups belonging to the sets are indicated by a respective resource block group number):

- included set: 5

- dropping out set: 4, 9

- coming in set: 6, 8, 11

- not included set: 1, 2, 3, 7, 10, 12

At the next reporting instance illustrated in Fig. 10, the four sets may have changed (e.g. due to channel fluctuation) as follows:

- included set: 5, 6, 11

- dropping out set: 9

- coming in set: 8

- not included set: 1, 2, 3, 4, 7, 10, 12

Assuming that the dropping out set and coming in set each include at most three entries, only three bits are required to signal a transition from one of these sets utilizing a differential index report (There may be either no transitions or one, two or three transitions which results in a total of $\sum_{i=0}^{3}\binom{3}{i}=8$ which may be encoded by *ld* 8 = 3 bits).

In this fashion, six bits are sufficient to signal up to six transitions (three from the coming in set to the included and three from dropping out set to not included set). Comparing this exemplary embodiment to that outlined above where the entire resource block group index field has been differentially encoded and was requiring 9 bits if allowing three transitions per report, 3 bits could be further saved.

An update of the sets may be preferably transmitted in a larger cycle than the differential index report. Additionally, an update of the "coming in set" may be transmitted with a different cycle than the "dropping out set". Such an update may be done either by a full report, or by a differential report according to the methods described herein.

It should be noted that when the fading in frequency domain is highly correlated the relative SINR change between resource block groups is small, so that set transitions may be unlikely. Hence, the coming in and dropping out sets may only comprise few elements (e.g. each 2 or 3), the transitions of which may be very efficiently differentially encoded as outlined above.

In further variation, only a limited number of transitions from the sets is allowed/reported. While this is a restriction, the effect is that the size restriction on the sets can be alleviated. For example, instead of allowing at most three elements in the coming in set, up to five elements may be allowed, while restricting the number of transitions from this set per differential index report to three. The same is applicable to the dropping out set, where of course the sizes and restrictions may be defined independently.

As already indicated above, according to some embodiments of the invention a full index report might be transmitted with or followed by more than one differential index report.

Thereby, differential index reports may be for example employed in one of the following fashions.

The differential index reports may be for example referencing the a jointly or previously transmitted full index report, i.e. the differential resource block group sequence of the differential report indicates the transitions to the resource block group sequences of the full report. The advantage of this solution is that erroneous reception or interpretation of a differential index report affects only the channel quality measures for which no other differential or full index report is received. In this way, error propagation is kept at a minimum. The downside of this concept may be seen in that the number of changes that occur will always be with respect to that full index report, so that after a few differential index reports the probability for a high number of changes increases. This may in turn be accounted for by allowing more changes for "later" differential index reports than for "earlier" differential index reports.

Another alternative solution according to another embodiment of the invention is that the differential index reports reference the jointly or previously received index report, where said jointly or previously received index report may be either a full report or a differential report. This means that the received index report is taken as reference for determining changes. The advantage is that between differential index reports, the probability for a given number of changes remains rather constant, so that only a single number of allowed changes for differential index reports needs to be defined. The disadvantage is that this solution that it may be prone to error propagation in case that a differential index report is received or interpreted erroneously - then all further differential index reports will most likely be at least partially erroneous as well, until another full index report "resets" this behaviour.

In case the maximum number of transitions that can be indicated in a single channel quality report is limited there will exist situations where more changes actually occur than the defined maximum number of allowable changes. Accordingly, the reporting entity may have to make a decision which of the transitions to report. The reporting entity may for example continue with reporting the maximum number of changes by choosing randomly from the actually occurring changes or alternatively, choosing those changes that occur for the strongest channel quality values, i.e. such that changes that cannot be reported do not represent strong channel quality values.

In an alternative solution the reporting entity could also transmit a special signal that correspondingly signifies "number of maximum allowed changes is exceeded" to the receiving entity. In case subsequent differential reports are transmitted it may be further advantageous if to reference the previously received index report. This reference may be for example the index report that has actually been transmitted. In other words, if for a first differential index report the number of changes exceeds the maximum, the subsequent differential index does not reference the channel state as it was detected previously, but as is was reported previously. In this way a change that cannot be reported in the first differential index report may be reported in a subsequent differential index report, if the change is still occurring.

Furthermore, it should be noted that the ideas and principles of the invention may also be advantageously used with channel quality reporting schemes other than the threshold scheme where a resource block group index is to be included in the channel quality reports. Table 4 shows an exemplary overview on the increase in the encoding schemes efficiency that could be reached on exemplary scenarios when using the proposed differential encoding of the resource block group index and the a differential encoding of the channel quality values. The suggested solutions herein may increase the reporting efficiency by roughly 40 to 50% compared to pure prior art schemes.

**Table 4**

| Compression Scheme | Full CQI Index Field | Full CQI Value Field | Differential CQI Index Field | Differential CQI Value Field | Total Saving |
|---|---|---|---|---|---|
| Best 5 Average | 16 bits | 10 bits | 7 bits | 6 bits | 50% |
| Best 7 Individual | 19 bits | 40 bits | 12 bits | 24 bits | 39% |
| DCT Greatest 8 | 19 bits | 40 bits | 12 bits | 24 bits | 39% |
| Threshold | 25 bits | 5 bits 1 | 2 bits | 3 bits | 50% |
| Partitioned DCT 8-6-1 | 26 bits | 35 bits | 17 bits | 21 bits | 38% |

The ideas and principles of the invention may also be utilized with channel quality reporting schemes where the measured channel quality measurement values of the different report bocks or report block groups are transformed and the resulting coefficient values are reported according to some scheme (like for example DCT Greatest M). Generally transform-based compression schemes take channel quality values as a sequence and transform this sequence into a second sequence consisting of coefficients using predefined formulas or algorithms. In order to compress the report, typically only selected coefficients (a subset of the coefficients) are reported.

Advantageously, the coefficients with the strongest magnitude are reported, since they are typically of highest importance for an accurate reconstruction of the channel state at the receiving entity. In order to identify which coefficients are reported, an index comparable to the resource block group index may be utilized (which can be also referred to as a coefficient index. Accordingly, in order to make use of the ideas and principles of the invention, this coefficient index may also be encoded as described before so that the differentially encoded coefficient index field in the reports indicate the transitions between two coefficient index fields.

Similarly, the number of transitions in the differentially encoded coefficient index might be limited to a maximum number. In case of using a reporting scheme where always a fixed number of coefficients is reported (like for example DCT Greatest M), the restriction of the maximum number of changes should be always 0 or a multiple of 2, since for every coefficient that is "coming in", another one is "dropping out".

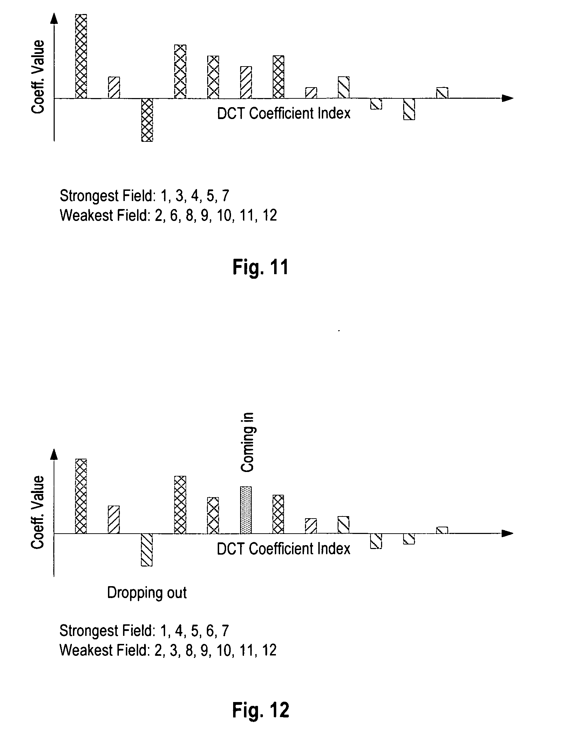

According to another embodiment of the invention two sets of coefficients may be defined: A first set containing coefficients (respectively their indices) that are used for the channel quality report, and a second set containing the remaining coefficients. Obviously both sets are mutually exclusive. An example of such sets is exemplarily shown in Fig. 11 and Fig. 12 as "Strongest Field" and "Weakest Field" respectively. As becomes apparent, coefficient number 3 is dropping out of the Strongest Field while coefficient 6 is coming into the Strongest Field. Given the fact that always 5 coefficients are used for the channel quality reporting, and further assuming that at most two coefficients can be reported as "coming in" and "dropping out", up to two changes into a set of five elements (strongest field) and up to two changes into a set of seven elements (weakest field) may be signalled in this example. In total this would sum up to

$$\left[\binom{5}{0}+\binom{5}{1}+\binom{5}{2}\right]\cdot\left[\binom{7}{0}+\binom{7}{1}+\binom{7}{2}\right] = 464$$ possibilities of how those changes could occur, which requires 9 bits for signalling.

In general, for a compression scheme always signalling M out of n coefficients (or values/resource block groups) and allowing up to k changes (the maximum number of changes that can be reported) then the following inequality must be fulfilled to enable a more efficient reporting requiring m bits, in comparison to a full report:

$$m = \left\lceil ld\left[\sum_{i=0}^{k}\binom{M}{i}\cdot\sum_{i=0}^{k}\binom{n-M}{i}\right]\right\rceil < \left\lceil ld\left[\sum_{i=0}^{k}\binom{n}{2\cdot i}\right]\right\rceil \qquad \text{(Equation 2)}$$

Allowing up to 4 changes in a set of twelve elements (i.e. without exploiting the property that for one coefficient is "coming into" one set and due to the sets being mutually exclusive has to "go out" of the other set, but exploiting the fact that only an even number of changes can occur), there are 562 possibilities, for which 10 bits are required. This can be calculated by the right side of the inequality sign in Equation 2. Depending on the actual numbers, one or the other method may be preferable due to fewer required bits.

Similarly, the principles and ideas of the invention equally apply to CQI signalling schemes where no transformations are foreseen. As indicated above for the CQI reporting schemes utilizing transformations, the invention may also be used in schemes where always a fixed number ("M") of resource blocks or resource block groups is reported.. The major difference to the threshold scheme is that the value M is fixed. Therefore, an index field is required, to denote which of the resource block groups is among the e.g. strongest M.

Since the value M is fixed, for a full index field report, already some compression is possible compared to the threshold scheme, since the number of possibilities is smaller. For example, if always 5 out of 12 resource block group indices need to be signalled, then there exist $\binom{12}{5} = 792$ possibilities, requiring a full index field size of 10 bits.

Hence in general, a scheme where always $M$ out of $m$ resource block indices are to be signalled requires $\left\lceil ld\binom{m}{M}\right\rceil$ bits for signalling.

If utilizing a differential resource block group index for signalling only transitions and considering that the number M is fixed, one will further notice that changes/transitions always occur pair-wise: For each resource block group "coming in", another one has to "drop out".

In order to allow two resource block groups to "come in" in a differential resource block group index report, also two resource block group need to be allowed "dropping out". Therefore in a straightforward way, if the maximum number of transitions is limited up to four changes, in the example of having 12 resource block groups to report there are in total

$\left[\binom{12}{0}+\binom{12}{2}+\binom{12}{4}\right] = 562$ possibilities, requiring 10 bit. So in this example, there is not a benefit in coding efficiency for the differential index. Allowing only up to two changes, only $\left[\binom{12}{0}+\binom{12}{2}\right] = 67$ possibilities exist, requiring only 7 bits.

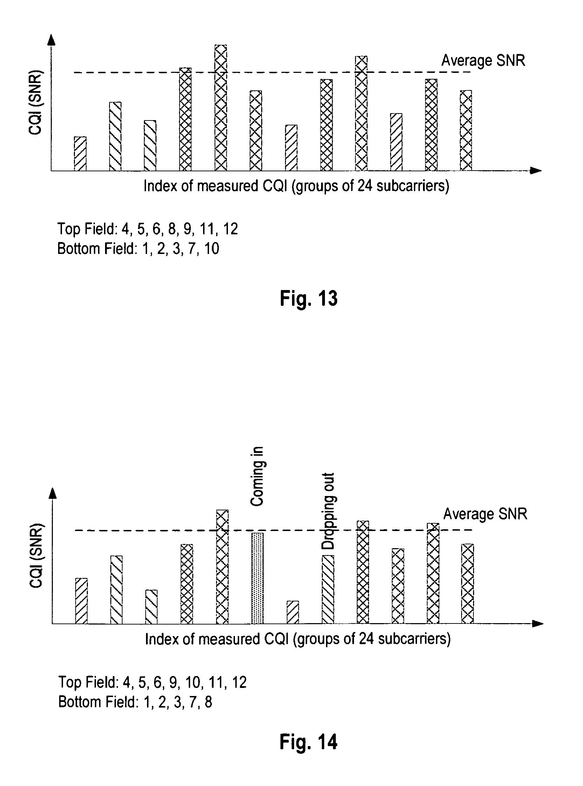

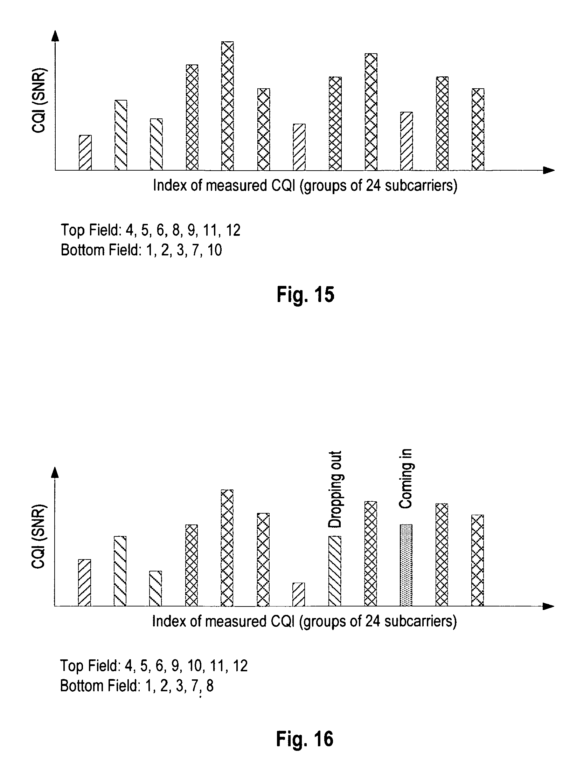

Accordingly, the ideas and principles of the invention may also be applied to a Best M scheme. For example considering a Best 7 Average reporting scheme, the mechanism is shown in Fig. 13 and Fig. 14. The first set ("Top Field") contains 7 elements, while the second set ("Bottom Field") contains 5 elements. For sake of completeness, the average SINR from the best 7 resource block groups is also shown. Similarly, for a Best 7 Individual reporting scheme in Fig. 15 and Fig. 16, the same method can be applied, as the only change in this case is that not an average SINR is reported, but the SINR of each of the 7 best resource block groups.

The principles and ideas of the invention may also be used when employing signalling schemes for channel quality information that employ partitioning, as for example described in the co-pending application no. EP 06 020 175.3 of the same applicant. In one embodiment o the invention, the ideas and principles of the invention are used in combination with a partitioning scheme as described in this co-pending application.

Generally, the concept of the partitioning scheme is to form at least two partitions out of all resource block groups or resource blocks to report on, for example by dividing the resource block groups or resource blocks into the partitions based on a selection criterion (e.g. threshold-based, strength-based, etc.). Consequently a partition index field in the channel quality report needs to signal which resource block groups (or resource blocks) belong to which partition.

Since this relationship can change between reports, also for this partition index field the present invention can be applied. Accordingly, same ideas and principles as that outlined for the differential index field in any of the previously described embodiments of the invention may also applied to the signalling of transitions between partitions.

For example, if the strongest M resource block groups belong to partition #1, and the other resource block groups belong to partition #2, the same method may be used for encoding transitions in the partitions at two distinct reporting instances as outlined as for compression schemes that report a fixed number $M$ of coefficients or resource block groups.

Additionally, it may be further advantageous to apply compression of the channel quality information in each partition individually and independently. Accordingly, for each of the partitions another partition index field should be included in the channel quality report. Again, depending on the compression scheme used for a partition, the differential index field approach as outlined herein can be applied to that partition's compression scheme mutatis mutandis.

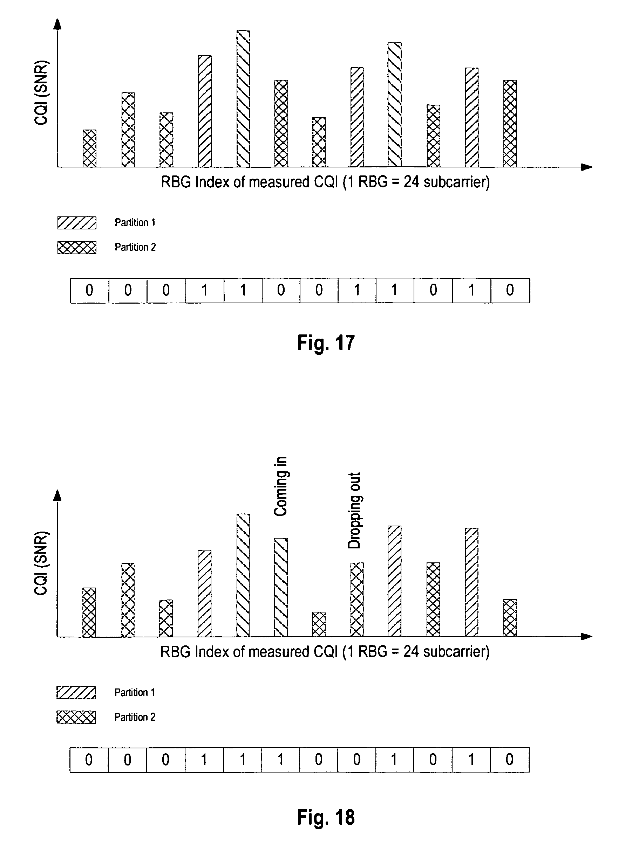

For example, considering that at a first time instance the partitioning is as given in Fig. 17, i.e. 5 resource block groups belong to partition #1, and 7 resource block groups belong to partition #2, a full partition index report for the partition affiliation may exemplarily require 12 bits (as indicated on the bottom of Fig. 17), where a "1" signifies an affiliation to partition #1, and a "0" signifies an affiliation to partition #2.

If at the subsequent report instance the conditions change into a new partition affiliation as exemplarily shown in Fig. 18, a full partition index report for the partitioning would again require 12 bits.

However, when only indicating transitions in the partitions between the two reporting instances and further limiting the number of transitions between the partitions to three, the number of bits for such a differential partition index report for indicating the transitions can be reduced to represent $\left[ \binom{12}{0} + \binom{12}{1} + \binom{12}{2} \right] = 79$ possibilities, requiring only 7 bits.

Depending on the actual algorithm that is used to do the partitioning, additional properties may be exploited similar to those outlined for compression schemes that report a fixed number M of coefficients or resource block groups, where the number of changes is always zero or a multiple of two. Likewise, instead of pointing into changes of the resource block groups, the pointing could be with respect to changes into partition #1 and partition #2, similar to the concept above where it has been discussed how to exploit the property of sets (i.e. partitions in this case) defining exclusive-sets of indices.

As has been further become apparent form the various examples herein, the number of bits required for a resource block group field (sequence) / coefficient index field (sequence) / partition index field (sequence) may allow signalling more transitions than actually possible for the given scenario. According to another embodiment of the invention these excess possibilities that can be represented by the number of bits used for the respective sequence / index field may be used to send a message from the reporting entity to the receiving entity indicating that the maximum allowed number of changes has been exceeded. This message may either have a stand-alone meaning, or it could be in combination with a valid report on transitions. For example, if there are 48 excess possibilities, and there exist 12 possibilities for a single change, then 12 out of the 48 excess possibilities may be defined as to mean one change according to the possible 12 possibilities for a single change, coupled with the message that beyond this one reported change excessive changes could not be reported because they exceeded the defined / allowed upper limit.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

It should be further noted that most of the embodiments have been outlined in relation to a 3GPP-based communication system and the terminology used in the previous sections mainly relates to the 3GPP terminology. However, the terminology and the description of the various embodiments with respect to 3GPP-based architectures is not intended to limit the principles and ideas of the inventions to such systems.

Also the detailed explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures described in the Technological Background section. Furthermore the concept of the invention may be also readily used in the LTE RAN currently discussed by the 3GPP.

**Claims**

1. A method for reporting channel quality reports in a mobile communication system, the method comprising the steps of:

   generating a resource block group sequence representing a set of resource block groups to be reported in the channel quality report,
   generating a channel quality report indicating transitions between the generated resource block group sequence and another resource block group sequence in its channel quality index field, and
   transmitting the channel quality report.

2. The method according to claim 1, wherein the channel quality index field indicates the resource block groups reported in the channel quality report, and
   the channel quality report further comprises a channel quality value field for indicating the channel quality values for the respective resource block groups reported.

3. The method according to claim 1 or 2, further comprising the step differentially encoding the generated resource block group sequence relative to the other resource block group sequence.

4. The method according to claim 3, wherein the differentially encoded generated resource block group sequence indicates the transitions between the generated resource block group sequence and the other resource block group sequence.

5. The method according to claim 3, wherein the other resource block group sequence is differentially encoded, and wherein the differentially encoded generated resource block group sequence indicates the transitions between the generated resource block group sequence and the differentially encoded other resource block group sequence.

6. The method according to claim 5, wherein the other resource block group sequence has been differentially encoded relative to a further differentially encoded or non-differentially encoded resource block group sequence.

7. The method according to one of claims 3 to 6, wherein a differentially encoded resource block group sequence only indicates up to a maximum number of transitions relative to another resource block group sequence.

8. The method according to one of claims 1 to 7, further comprising the step of:

   differentially encoding a set of channel quality values of the resource block groups to be reported relative to another set of channel quality values,
   wherein the generated channel quality report comprises the differentially encoded channel quality values in the channel quality value field.

9. The method according to one of claims 1 to 8, wherein the channel quality report indicates only up to a maximum number of transitions being smaller than the total number of possible transitions between the generated resource block group sequence and the other resource block group sequence.

10. The method according to claim 9, wherein the maximum number of transitions is set lower than or equal to the one half of the number of different possible resource block group sets that can be represented by the resource block group sequence.

11. The method according to claim 9, wherein the maximum number of transitions is set smaller than or equal to one half of the number of resource block groups on which a channel quality measurement is performed.

12. The method according to one of claims 1 to 11, wherein the resource block group sequence is a sequence of two or more bits, the different bit combinations of which indicate the different possible combinations of subsets of resource block groups.

13. The method according to claim 12, wherein the number of possible bit combinations representable by the resource block group sequence is larger than the number of different possible combinations of subsets of resource block groups, and at least one bit combination of the resource block group sequence is used for indicating that a maximum number of transitions between the generated resource block group sequence and the other resource block group sequence that can be indicated by the channel quality report has been exceeded.

14. A method for reporting channel quality reports in a mobile communication system, the method comprising the steps of:

   transforming a set of channel quality values to obtain a set of channel quality coefficients,
   selecting a subset of the channel quality coefficients to report,
   generating a coefficient index sequence indicating the indices of the selected subset of channel quality coefficients,
   generating a channel quality report indicating the transitions between the generated coefficient index sequence and another coefficient index sequence in its channel quality index field, and
   transmitting the channel quality report.

15. The method according to claim 14, wherein the channel quality index field indicates the selected subset of the channel quality coefficients reported in the channel quality report, and
   the channel quality report further comprises a channel quality coefficient value field for indicating the coefficient values of the selected channel quality coefficients.

16. The method according to claim 14 or 15, further comprising the step differentially encoding the generated coefficient index sequence relative to the other coefficient index sequence.

17. The method according to claim 16, wherein the differentially encoded generated coefficient index sequence indicates the transitions between the generated coefficient index sequence and the other coefficient index sequence.

18. The method according to claim 16, wherein the other coefficient index sequence is differentially encoded, and wherein the differentially encoded generated coefficient index sequence indicates the transitions between the generated coefficient index sequence and the differentially encoded other resource coefficient index sequence.

19. The method according to claim 18, wherein the other coefficient index sequence has been differentially encoded relative to a further differentially encoded or non-differentially encoded coefficient index sequence.

20. The method according to one of claims 16 to 19, wherein a differentially encoded coefficient index sequence only indicates up to a maximum number of transitions relative to another coefficient index sequence.

21. The method according to one of claims 14 to 20, wherein the channel quality report indicates only up to a maximum number of transitions being smaller than the total number of possible transitions between the generated coefficient index sequence and the other coefficient index sequence.

22. The method according to claim 21, wherein the maximum number of transitions is set lower than or equal to the one half of the number of different possible coefficient sets that can be represented by the coefficient index sequence.

23. The method according to one of claims 14 to 22, wherein the coefficient index sequence is a sequence of two or more bits, the different bit combinations of which indicate the different possible combinations of subsets of coefficients of the channel quality coefficients.

24. The method according to claim 23, wherein the number of possible bit combinations representable by the coefficient index sequence is larger than the number of different possible combinations of subsets of coefficients, and at least one bit combination of the of the resource block group sequence is used for indicating that a maximum number of transitions between the generated coefficient index sequence and the other coefficient index sequence that can be indicated by the channel quality report has been exceeded.

25. A method for reporting channel quality reports in a mobile communication system, the method comprising the steps of:

   partitioning channel quality values of resource block groups into at least two partitions, and
   processing at least one partitions according to the method of one of claims 1 to 24.

26. A method for reporting channel quality reports in a mobile communication system, the method comprising the steps of:

   partitioning channel quality values of resource block groups into at least two partitions,
   generating a partition index sequence representing a set of resource block groups in one of the partitions,
   generating a channel quality report indicating transitions of the generated partition index sequence relative to another partition index sequence, and
   transmitting the channel quality report.

27. A method according to claim 26, further comprising the step of processing at least one of the partitions according to the method of one of claims 1 to 24.

28. An apparatus for reporting channel quality reports in a mobile communication system, the apparatus comprising:

   a processing unit for generating a resource block group sequence representing a set of resource block groups to be reported in the channel quality report, and
   for generating a channel quality report indicating transitions between the generated resource block group sequence and another resource block group sequence in its channel quality index field, and
   a transmitter for transmitting the channel quality report.

29. The apparatus according to claim 28, wherein the processing unit is further adapted to perform the steps of the method according to one of claims 2 to 13.

30. An apparatus for reporting channel quality reports in a mobile communication system, the apparatus comprising:

   a processing unit for transforming a set of channel quality values to obtain a set of channel quality coefficients,
   for selecting a subset of the channel quality coefficients to report,
   for generating a coefficient index sequence indicating the indices of the selected subset of channel quality coefficients, and
   for generating a channel quality report indicating the transitions between the generated coefficient index sequence and another coefficient index sequence in its channel quality index field, and
   a transmitter for transmitting the channel quality report.

31. The apparatus according to claim 30, wherein the processing unit is further adapted to perform the steps of the method according to one of claims 15 to 24.

32. An apparatus for reporting channel quality reports in a mobile communication system, the apparatus comprising:

   a processing unit for partitioning channel quality values of resource block groups into at least two partitions, and
   means for processing at least one of the partitions according to the method of one of claims 1 to 24.

33. An apparatus for reporting channel quality reports in a mobile communication system, the apparatus comprising:

   a processing unit for partitioning channel quality values of resource block groups into at least two partitions,
   for generating a partition index sequence representing a set of resource block groups in one of the partitions, and
   for generating a channel quality report indicating transitions of the generated partition index sequence relative to another partition index sequence, and
   a transmitter for transmitting the channel quality report.

34. The apparatus according to claim 33, further comprising means for processing at least one of the partitions according to the steps of the method of one of claims 1 to 24.

35. A computer readable medium storing instructions that, when executed by a processing unit of an apparatus, cause the apparatus to report channel quality reports in a mobile communication system, by:

generating a resource block group sequence representing a set of resource block groups to be reported in the channel quality report,

generating a channel quality report indicating transitions between the generated resource block group sequence and another resource block group sequence in its channel quality index field, and

for transmitting the channel quality report.

36. The computer readable medium according to claim 39, further storing instructions that, when executed by the processing unit of the apparatus, cause the apparatus to perform the steps of the method according to one of claims 2 to 13.

37. A computer readable medium storing instructions that, when executed by a processing unit of an apparatus, cause the apparatus to report channel quality reports in a mobile communication system, by:

transforming a set of channel quality values to obtain a set of channel quality coefficients,

selecting a subset of the channel quality coefficients to report,

generating a coefficient index sequence indicating the indices of the selected subset of channel quality coefficients,

generating a channel quality report indicating the transitions between the generated coefficient index sequence and another coefficient index sequence in its channel quality index field, and

transmitting the channel quality report.

38. The computer readable medium according to claim 37, further storing instructions that, when executed by the processing unit of the apparatus, cause the apparatus to perform the steps of the method according to one of claims 14 to 24.

39. A computer readable medium storing instructions that, when executed by a processing unit of an apparatus, cause the apparatus to report channel quality reports in a mobile communication system, by:

partitioning channel quality values of resource block groups into at least two partitions, and

processing at least one of the partitions according to the method of one of claims 1 to 24.

40. A computer readable medium storing instructions that, when executed by a processing unit of an apparatus, cause the apparatus to report channel quality reports in a mobile communication system, by:

partitioning channel quality values of resource block groups into at least two partitions,

generating a partition index sequence representing a set of resource block groups in one of the partitions,

generating a channel quality report indicating transitions the generated partition index sequence and relative to partition index sequence, and

transmitting the channel quality report.

41. The computer readable medium according to claim 40, further storing instructions that, when executed by the processing unit of the apparatus, cause the apparatus to perform the steps of method of one of claims 1 to 24.

42. A channel quality report for use in reporting channel quality measurements of resource block groups in a mobile communication system, the channel quality report comprising a channel quality index field for indicating the transitions between two resource block group sequences to thereby identify a subset of resource block groups reported in the channel quality report.

43. The channel quality report according to claim 42, further comprising a channel quality value field for indicating the channel quality values for the respective resource block groups reported in the channel quality report.

44. The channel quality report according to claim 42 or 43, wherein the channel quality index field is adapted to convey differentially encoded information indicating the transitions between two resource block group sequences.

45. The channel quality report according to one of claims 42 to 44, wherein the channel quality value field is adapted to convey a differentially encoded set of channel quality values indicating the channel quality values for the respective resource block groups reported in the channel quality report relative to another set of channel quality values.

EP 1 988 654 A1

**Fig. 1**

Fig. 2

One downlink slot, $T_{slot}$

$N_{symb}^{DL} \times N_{BW}^{RB}$ resource elements

Resource block

Resource element

$N_{BW}^{DL}$ subcarriers

$N_{BW}^{RB}$ subcarriers

$N_{symb}^{DL}$ OFDM symbols

**Fig. 3**

Highest CQI

**Fig. 4**

| CQI Index Field<br>e.g. Strongest RB position,<br>Strongest DCT component index | CQI Value Field<br>e.g. Strongest RB SNR(s),<br>Strongest DCT component value(s) |
|---|---|

**Fig. 5**

Highest CQI

CQI (SNR)

CQI Threshold

RBG Index of measured CQI (1 RBG = 24 subcarrier)

| 0 | 0 | 0 | 1 | 1 | 0 | 0 | 0 | 1 | 0 | 0 | 0 |
|---|---|---|---|---|---|---|---|---|---|---|---|

**Fig. 6**

Highest CQI

Dropping out

Coming in

CQI (SNR)

CQI Threshold

RBG Index of measured CQI (1 RBG = 24 subcarrier)

| 0 | 0 | 0 | 0 | 1 | 1 | 0 | 0 | 1 | 0 | 1 | 0 |
|---|---|---|---|---|---|---|---|---|---|---|---|

**Fig. 7**

EP 1 988 654 A1

←1 subframe→

**Prior art Full Reports**

| Full Report (30 bits) | Full Report (30 bits) | Full Report (30 bits) |

**Differential Reporting**

| Full Report (30 bits) | Differential Report (15 bits) | Full Report (30 bits) | Differential Report (15 bits) |

| Full CQI Index Field | Full CQI Value Field |

| Differential CQI Index Field | Differential CQI Value Field |

**Fig. 8**

Highest CQI

CQI Threshold

CQI (SNR)

RBG Index of measured CQI (1 RBG = 24 subcarrier)

| | „Not included" set | | „Coming in" set |
|---|---|---|---|
| | „Included" set | | „Dropping out" set |

**Fig. 9**

Dropped out

Came in

CQI (SNR)

RBG Index of measured CQI (1 RBG = 24 subcarrier)

| | „Not included" set | | „Coming in" set |
|---|---|---|---|
| | „Included" set | | „Dropping out" set |

**Fig. 10**

Strongest Field: 1, 3, 4, 5, 7
Weakest Field: 2, 6, 8, 9, 10, 11, 12

**Fig. 11**

Dropping out

Strongest Field: 1, 4, 5, 6, 7
Weakest Field: 2, 3, 8, 9, 10, 11, 12

**Fig. 12**

Top Field: 4, 5, 6, 8, 9, 11, 12
Bottom Field: 1, 2, 3, 7, 10

**Fig. 13**

Top Field: 4, 5, 6, 9, 10, 11, 12
Bottom Field: 1, 2, 3, 7, 8

**Fig. 14**

Top Field: 4, 5, 6, 8, 9, 11, 12
Bottom Field: 1, 2, 3, 7, 10

**Fig. 15**

Top Field: 4, 5, 6, 9, 10, 11, 12
Bottom Field: 1, 2, 3, 7, 8

**Fig. 16**

| 0 | 0 | 0 | 1 | 1 | 0 | 0 | 1 | 1 | 0 | 1 | 0 |

**Fig. 17**

| 0 | 0 | 0 | 1 | 1 | 1 | 0 | 0 | 1 | 0 | 1 | 0 |

**Fig. 18**

))) **European Patent**
 **Office**

**EUROPEAN SEARCH REPORT**

Application Number

EP 07 00 8875

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PANASONIC: "Evaluation and Error Statistics for CQI Reporting Schemes" 3GPP TSG-RAN WG1 MEETING #47, R1-063184, 6 November 2006 (2006-11-06), - 10 November 2006 (2006-11-10) XP002456656 Riga, Latvia * page 2, paragraph 2.1.2 - page 3 * * page 9, paragraph 5 - page 10 * ----- | 1-45 | INV. H04L1/00 |
| X | EP 1 596 524 A (LUCENT TECHNOLOGIES INC [US]) 16 November 2005 (2005-11-16) * column 4, paragraphs 13,14; figure 4 * * column 4, paragraph 17 - column 5; figure 6 * * column 5, paragraph 19 * * column 6, paragraph 21 * ----- | 1-45 | |
| X | WO 2006/126080 A (NOKIA CORP [FI]; PI ZHOUYUE [US]; ZHOU FEI FRANK [US]; RONG ZHIGANG [U) 30 November 2006 (2006-11-30) * page 11, paragraph 46 * * page 11, paragraph 48 - page 12 * ----- | 1-45 | TECHNICAL FIELDS SEARCHED (IPC) |
| X | US 2005/281226 A1 (LEE YONG-HWAN [KR] ET AL) 22 December 2005 (2005-12-22) * page 3, paragraph 30 * ----- | 1-45 | H04L |
| X | HUAWEI: "Overhead reduction of UL CQI signalling for E-UTRA DL" 3GPP TSG-RAN WG1 MEETING AD HOC LTE, XX, XX, no. R1-61819, 27 June 2006 (2006-06-27), pages 1-9, XP002420471 pages 2-3, section 3 ----- | 1-45 | |

The present search report has been drawn up for all claims

| Place of search | Date of completion of the search | Examiner |
|---|---|---|
| The Hague | 26 October 2007 | Kazaniecki, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 07 00 8875

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2007

| Patent document cited in search report | | Publication date | Patent family member(s) | | Publication date |
|---|---|---|---|---|---|
| EP 1596524 | A | 16-11-2005 | CN 1697437 A<br>JP 2005323385 A<br>KR 20060045945 A<br>US 2005249127 A1 | | 16-11-2005<br>17-11-2005<br>17-05-2006<br>10-11-2005 |
| WO 2006126080 | A | 30-11-2006 | US 2007183303 A1 | | 09-08-2007 |
| US 2005281226 | A1 | 22-12-2005 | KR 20050119590 A | | 21-12-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 06020175 A

**Non-patent literature cited in the description**

- **RAN YANIV et al.** *CINR measurements using the EESM method,* March 2005